# EUROPEAN PATENT SPECIFICATION

(11) **EP 0 519 143 B1**
(45) Date of publication and mention of the grant of the patent: **24.05.1995**
(21) Application number: 91500057.4
(22) Date of filing: 06.06.1991
(51) Int. Cl.: A01K 9/00

(54) **Improvements introduced in animal lacteal feeding facilities**
Verbesserungen an Milchfütterungsvorrichtungen
Perfectionnements apportés aux appareils destinés à l'allaitement animal

(43) Date of publication of application: 23.12.1992
(73) Proprietor: SIPAL, S.A., E-28007 Madrid (ES)
(72) Inventor: Hernandez de la Casa, Julián, Madrid (ES)
(74) Representative: Alonso Langle, Emilio

(56) References cited:
- EP-A- 0 203 549
- DE-A- 3 316 434
- DE-A- 3 419 839
- DE-U- 1 906 788
- GB-A- 1 215 522

## Description

### SUBJECT OF THE INVENTION

This invention refers to a series of improvements made to installations for the supply of milk to breeding facilities for animals such as calves, piglets, etc. as a feed in substitution or addition to the mother's milk.

### BACKGROUND TO THE INVENTION

It is known that livestock productivity, specifically that in the case of breeding livestock, is a function of two variables: on the one hand the number of births per annum and, on the other, the survival and growth rate of the young.

Conventional systems, in which the young were fed basically on the milk of the mother at least during an initial and extended period of their lives, has virtually fallen into disuse except in very small facilities, and artificial feeding has been adopted, in the first instance on the basis of dried milk extract, later complemented with feed and finally using feed alone.

Focusing on the first stages of growth, the fact that feeding is implemented virtually immediately after birth using artificial milk brings a series of benefits, notably the following:
- The mother can become pregnant again very shortly following a birth, if this is required, thereby greatly increasing her productivity, as is the case for example with pig stock.
- The absence of a need for a physical relation between mother and young means the latter can be kept in more suitable areas for the maintenance of optimum conditions of temperature and hygiene, something which is much harder to attain in an area where the mother must also be accommodated.
- Using the suckling system itself, with bottles or teats, any type of additive can be provided along with the milk, e.g. vitamins, iron or any type of preventive or curative feed, so improving the animals' physical and health conditions.

Until the present, installations for this type of feeding consisted of a vessel in which milk-water mix was made manually with any additives, according to a given dose: piping ran from said vessel which contained the nozzles or teats, preferably the same number as that of the animals to be fed simultaneously from a single vessel.

The problem of this type of facility is basically focused on the fact that, because the milk tends to ferment quickly, doses must be precisely gauged to minimize costs and samples can only be taken at specific pre-set times, when the milk is being prepared. This means that the feed is not freely available to the animals so that the strongest ones feed faster and so exceed their ration at the expense of the weaker ones, and the normal physical disproportions with which the young are born become increasingly marked rather than gradually correcting with time.

On the other hand, the animals may spend a given time without feeding provided that the dose in each feed is the correct one: however, it is not advisable that they should spend so long without drinking, so that a complementary water supply facility must be provided.

There is known an automatic apparatus for feeding animals, described in patent GB-A-1215522, which consists essentially in a storage container for milk powder, a water tank and a mixing vessel, all of them with the corresponding regulating valves, and a closed circuit of piping with pumping means for delivering the liquid milk to teats and the return of non-used mixture to the vessel, but it has no means to supply aditives in the correct quantity and it has a complex control system to regulate the water required to the mixture.

### DESCRIPTION OF THE INVENTION

The proposed improvements in the invention provide a fully satisfactory solution to the different aspects of the above problems: such improvements consist of designing the installation as a closed circuit, with a permanent supply of milk to the area of the teats i.e. so that milk is freely available to the animals.

More specifically, the basis is a vessel in which a considerable amount of dried milk is supplied from a hopper and with the appropriate dosage valve: there are two water inlets operating with said hopper, one cold and the other hot, with electrovalves for dosage, and a final dosage hopper for additives such as drugs, vitamins, minerals or other components considered necessary for the correct feeding of the animal.

The incorporation of a hopper for additives make it possible to supply the exact dosification of additives, instead of introducing them into the milk powder container, like it happens in other apparatuses.

For preference, by means of a simple program each time the vessel is emptied, it is possible to secure automatically the exact dosification of the dried milk, additives and hot or cold water so as to obtain the right mixture at the right temperature, using temperature sensors installed in the vessel.

In addition, said vessel is linked to a line of teats through a pump on a closed cycle, so that said pump circulates the milk continuously, moving it as a whole, thereby facilitating the dissolution of the dried milk as well as preventing it from fermenting, for which the milk must be stagnant.

More specifically, said circuit for feed to the teats runs from inside the vessel at the highest level, close to the level of the milk at any given time, with the aid of a float and a flexible hose, while the return, through the mouth or top opening of the vessel, discharges at the bottom in order to facilitate the movement of the entire mass of the milk contained in the vessel, and its dissolution.

In addition to the structure described, and another of the features of the invention, there is provision for said float, linked to the flexible piping which absorbs the milk through the pump, also to incorporate a switch that operates when said float approaches the bottom of the vessel, specifically when the arm of the switch touches said bottom, particularly when the level of the milk reaches a pre-set minimum. This switch shuts the pump off momentarily at the same time as activating the dried milk and water supply program to fill the vessel.

There is a difference between this simple switch, which allows to activate the valves as a single manner, and the electrical level indicators used in other devices.

The fact that the pump takes the milk from the top means that any particles deposited on the bottom of the vessel are not absorbed: at the same time, with the take-off at the top and the return at the bottom, better movement of the mixture is ensured.

### DESCRIPTION OF THE DRAWINGS

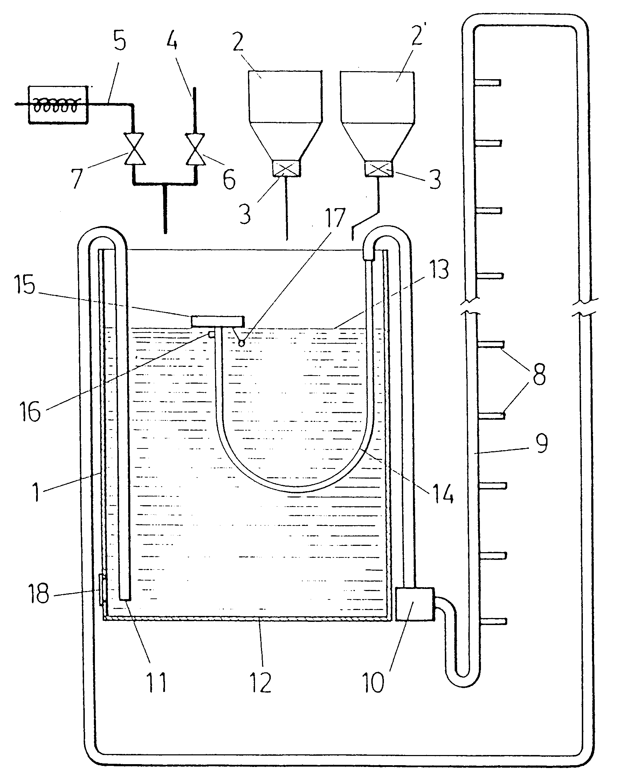

To complement the description being given, and in order to help in a better grasp of the characteristics of the invention, these Specifications are accompanied by a single page of drawings, forming an integral part hereof and which, by way of illustration and without limitation, shows in a single figure a diagram of an installation for the milk-feeding of animals, designed with the improvements which are the subject of this invention.

### A PREFERENTIAL DESIGN OF THE INVENTION

Said figure shows how an animal milk-feeding facility designed according to the proposed improvements is structured on the basis of a vessel (1) of suitable capacity in which liquid milk must be made from dried milk supplied at the required times from a feed hopper (2) with its dosage valve (3) and, in operation with said hopper (2) a second hopper (2'), also with a dosage valve (3'), and a cold water inlet (4) and hot water inlet (5) with their associated electrovalves (6), (7) and (19).

The vessel (1) containing the liquid milk is linked to the series of teats (8) through which the different animals are to feed, with the aid of piping (9) incorporating a motor driven pump (10) which impels the milk permanently toward the teats and beyond them in a closed circuit back to the vessel (1), through the outlet (11) close to the bottom (12) of said vessel.

For its part, the intake for the pump (10) is fixed permanently close to the level (13) of liquid milk inside the tank: the piping (9), which may be rigid or flexible, finishes at this inlet end in a flexible section (14) joined to a float (15) so that, as seen from the figure, the suction opening (16) of said ducting (14) is at all times in the area of the level (13).

The float (15) also has a switch (17) shown diagrammatically in the figure, which stops the pump (10) and opens the dosage valves (3) and (3'), (6) and (7), when level (13) reaches a pre-set bottom limit, i.e. when the amount of liquid milk is about to run out and the vessel must be topped up (1).

As already pointed out, the dosage valves (3) and (3') of the dried milk hoppers (2) and (2') and the valves (6) and (7) supplying the hot and cold water can be controlled by a simple program which means that the process can be fully automated with exact dosification.

In addition, at the bottom, vessel (1) incorporates a drainage plug (18) for period cleaning of the vessel.

As a complement to the structure described, the installation may also have devices for the supply to the vessel (1) of any other type of additive which may be felt advisable for the milk, along with acidification facilities to prevent the milk from fermenting: whether or not included, this does not, along with the type of additive employed, in any way affect the substance of the invention.

The teats (8) may be of any standard type, and will in any case have valve mechanisms which automatically close them off as soon as the mouth of the animal ceases to act on them.

It is not felt necessary to dilate further in this description in order for any expert in the field to grasp the scope of the invention and the benefits derived therefrom.

The materials, shape and arrangement of the components may be varied, provided that this does not involve an alteration to the essence of the invention.

## Claims

1. Installation for the milkfeeding of animals comprising a mixing vessel (1) with a bottom (12) for the preparation of liquid milk, a feed hopper (2) with a dosage valve (3) mounted over said vessel (1) for the supply of dried milk to said mixing vessel (1), piping means (9) including pumping means (10) for delivering (9) the liquid milk contained in the vessel (1) from a suction port (16) in a closed circuit to one or more teats (8) for the animals connected to said piping means (9) and back to the vessel (1) through an outlet (11) close to the bottom (12) of said vessel (1) and a water inlet mounted to said vessel (1) characterised in that the installation further comprises a second hopper (2') with a dosage valve (3) mounted over said vessel (1) for the supply of additives, in that the water inlet consists of a cold water inlet (4) and a hot water inlet (5) with their associated electrovalves (6,7), in that the piping means (9) at its end running from the vessel (1) terminates in a flexible section (14) with the suction port (16) connected to a float (15) floating on the liquid milk inside the vessel (1) whereby the suction port (16) remains at all times just beneath the level (13) of the liquid milk and in that said float incorporates a switch (17) with an arm which, when the level of the liquid milk in the vessel reaches a miminum level, touches the bottom (12) of said vessel (1), operating the switch (17) thereby stopping the pump means (10) and starting up a control mechanism for the valves (3, 3', 6, 7) providing dried milk, additives and hot and cold water for a new dosage.

2. Installation for the milk-feeding of animals as set forth in claim 1 wherein the float linked to the liquid milk intake pipe has a switch with an arm or level (17) which, when the level (13) of the liquid milk reaches a minimum level in the vessel (1), touches the bottom (12) of said vessel, operating the switch thereby stopping the pump (10) from impelling the milk and starting up the control mechanisms for electrovalves (3) and (3'), (6) and (7) providing the dried milk and the hot and cold water for a new dosification.

## Patentansprüche

1. Anlage für die Milchfütterung von Tieren bestehend aus einem Mischbehälter (1) mit einem Boden (12) für die Zubereitung flüssiger Milch, einem Aufgabetrichter (2) mit einem Dosierungsventil (3), die über dem besagten Behälter (1) für die Einspeisung von Trockenmilch in den besagten Behälter (1) montiert werden; den Verrohrungen (9) einschließlich der Pumpenaggregate (10) für die Zulieferung (9) der sich im Behälter (1) befindlichen flüssigen Milch von einem Ansaugkanal (16) in geschlossener Bahn zu einer oder mehrerer Zitzen (8) für die Tiere, die an die besagten Verrohrungen (9) angeschlossen sind und die zurück zum Behälter (1) durch einen Ablauf (11) dicht über dem Boden (12) des besagten Behälters (1) verlaufen sowie einem Wasser-einlaß, der am besagten Behälter (1) montiert wird,
**dadurch gekennzeichnet,**
daß die Anlage außerdem einen zweiten Trichter (2') mit einem Dosierungsventil (3) umfaßt, der für die Zufuhr von Zusatzwirkstoffen über dem besagten Behälter (1) montiert wird und daß die Wasserzufuhr aus einem Einlaß für kaltes Wasser (4) und einem Einlaß für warmes Wasser (5) mit den zugehörigen Elektroventilen (6, 7) besteht und daß die am Ende vom Behälter (1) ausgehenden Verrohrungen (9) in einem flexiblen Bereich (14) enden, indem der Ansaugkanal (16) an einen Schwimmer (15) angeschlossen ist, der auf der flüssigen Milch im Behälter (1) schwimmt, währenddessen der Ansaugkanal (16) stets kanpp unter dem Niveau (13) der flüssigen Milch verbleibt und daß im besagten Schwimmer ein Absperrglied (17) mit einem Arm integriert ist, der bei Niedrigstand der flüssigen Milch im Behälter den Boden (12) des besagten Behälters (1) berührt, wobei auf das Absperrglied (17) eingewirkt wird, indem es die Pumpaggregate (10) zum Stillstand bringt und einen Kontrollmechanismus für die Ventile (3, 3', 6, 7) auslöst, der dann die Anlage mit Trockenmilch, Zusatzwirkstoffen sowie mit warmem und kaltem Wasser für eine neue Dosierung versorgt.

2. Anlage für die Milchfütterung von Tieren nach Anspruch 1, indem der mit dem Einführungsrohr verbundene Schwimmer ein Absperrglied mit einem Arm oder mit einer Libelle (17) aufweist, der bei Niedrigstand (13) der flüssigen Milch im Behälter (1) den Boden (12) des besagten Behälters berührt, wobei das Absperrglied in Bewegung gesetzt wird, indem es die Pumpe (10) abstoppt, die Milch anzutreiben und wodurch der Kontrollmechanismus für die Elektroventile (3) und (3') sowie (6) und (7) ausgelöst wird, um die Anlage mit Trockenmilch sowie warmem und kaltem Wasser für eine neue Dosierung zu versorgen.

## Revendications

1. Installation pour l'alimentation en lait du bétail comprenant un récipient de mixage (1) avec un fond (12) pour la préparation du liquide lacté, un distributeur d'aliments (2) avec une valve de dosage, (3) situé sur le récipient en question (1), pour y (1) introduire le lait en poudre, des tuyaux (9) comportant des pompes (10) pour libérer (9) le liquide lacté contenu dans le récipient (1) en circuit fermé, à partir d'un clapet de succion (16) vers une ou plusieurs tétines (8) pour les animaux branchées aux tuyaux précités (9) avec retour au récipient (1) par un orifice (11) situé près du fond (12) de ce dernier (1) et une entrée d'eau située sur le récipient en question (1) caractérisée par le fait que l'installation ultérieure comprend un second distributeur (2') avec une valve de dosage (3) située sur le récipient (1) pour l'introduction d'additifs, dans lequel l'entrée d'eau comprend une entrée d'eau froide (4) et une entrée d'eau chaude (5) avec leurs électrovalves respectives (6,7), et dans lequel les tuyaux (9), en fin de course depuis le récipient (1) se terminent par une section flexible (14), le clapet de succion (16) étant branché à un flotteur (15) qui flotte sur le liquide lacté à l'intérieur du récipient (1) et grâce auquel le clapet de succion reste en permanence juste en-dessous du niveau (13) du liquide lacté, le flotteur en question possède un interrupteur (17) avec un bras qui, lorsque le liquide lacté est à un niveau minimum dans le récipient, en (1) atteint le fond (12), faisant actionner l'interrupteur (17), stoppant ainsi la pompe (10) et mettant en marche un mécanisme de contrôle des valves (3, 3', 6, 7) pour introduire le lait en poudre, les additifs, l'eau chaude et l'eau froide pour un nouveau dosage.

2. Installation pour l'alimentation en lait du bétail faite comme précédemment dans la réclamation 1 où le flotteur, connecté au tuyau d'entrée du liquide lacté, possède un interrupteur à bras ou à niveau (17) qui, lorsque le niveau (13) du liquide lacté est au minimum dans le récipient (1), en (1) atteint le fond (12), faisant actionner l'interrupteur par lequel on stoppe ainsi la pompe (10) en évacuant le lait et en mettant en marche les mécanismes de contrôle des électrovalves (3), (3'), (6) et (7) pour introduire le lait en poudre, l'eau chaude et l'eau froide pour une nouvelle dosification.
